# EUROPEAN PATENT APPLICATION

(11) **EP 4 782 757 A1**
(43) Date of publication of application: **29.07.2026**
(21) Application number: 26153537.1
(22) Date of filing: 22.01.2026
(51) Int. Cl.: F24F 11/46, F24F 11/64, G05B 15/02

(54) **SYSTEM FOR REGULATING ENVIRONMENTAL CONDITIONS INSIDE A BUILDING**

(30) Priority: 24.01.2025 IT 202500001227
(71) Applicant: Roverplastik S.P.A., 38060 Volano (TN) (IT)
(72) Inventor: GUARDINI, Aldo, 38122 FRAZIONE COGNOLA, TRENTO (IT)
(74) Representative: Modiano, Micaela Nadia

(57) **Abstract**

A system (1) for regulating environmental conditions inside a building (100), characterized in that it comprises a plurality of sensor means (2a, 2b, 2c, etc.) which comprise:
- at least one brightness sensor (2b);
- at least one presence sensor (2c) configured to monitor the presence of individuals inside the building;
- at least one CO₂ sensor (2d) configured to monitor the percentage of carbon dioxide inside the building;
the plurality of sensor means (2a, 2b, 2c, etc.) is connected in input to a control unit (10) comprising a neural network-based artificial intelligence engine configured to define, as a function of the data monitored by the sensor means (2a, 2b, 2c, etc.), a plurality of commands for actuation means configured to actuate a plurality of adjustment devices (20, 21, etc.) of environmental conditions, which comprise at least one device for forced exchange of the air inside the building and at least one device for adjusting at least one solar shading/blind apparatus.

## Description

The present invention relates to a system for regulating environmental conditions and air quality inside a building.

Systems are known for regulating environmental conditions and air quality, typically temperature and CO₂ concentration, of buildings such as dwellings, which use devices, for example sensors, which are adapted to measure one or more values in order to actuate solar shades, blinds and air exchangers.

By way of example, such systems use sensors that can measure exterior brightness, interior temperature, humidity etc..

Traditionally, each parameter measured makes it possible to intervene on an apparatus to seek to regulate the interior environmental conditions, in order to return them to preset values.

Systems are also known in which sensors of environmental parameters are integrated in the window frame (window opening), both to purify the air (integrated CMV control, via measurement of CO₂ and PM2.5), and also to actuate air conditioners and/or solar shades and blinds.

In recent years, in particular, there has been a tendency to integrate sensors and actuators in window openings, for the purpose of improving living comfort and energy savings.

The conventional solutions do not make it possible to manage the environmental conditions overall by seeking to bring the values of the various parameters (temperature, humidity, percentage of oxygen etc.) within certain values which were defined in advance at setup time, or as a reaction to monitoring of the various parameters.

The aim of the present invention is to provide a system for regulating environmental conditions inside a building that is capable of improving the known art in one or more of the above-mentioned aspects.

Within this aim, an object of the invention is to make available a system for regulating environmental conditions inside a building that can interface with a high number of sensors in order to obtain a considerable flexibility of operation and prediction-based management based on predictive scenarios.

Not least an object of the invention is to provide a system for regulating environmental conditions inside a building that is highly reliable, easy to implement, and low cost.

This aim and these and other objects which will become more apparent hereinafter are achieved by a system for regulating environmental conditions inside a building according to claim 1, optionally provided with one or more of the characteristics of the dependent claims.

Further characteristics and advantages of the invention will become more apparent from the detailed description that follows of a preferred, but not exclusive, embodiment of the system for regulating environmental conditions inside a building according to the invention, which is illustrated by way of non-limiting example in the accompanying drawings wherein:

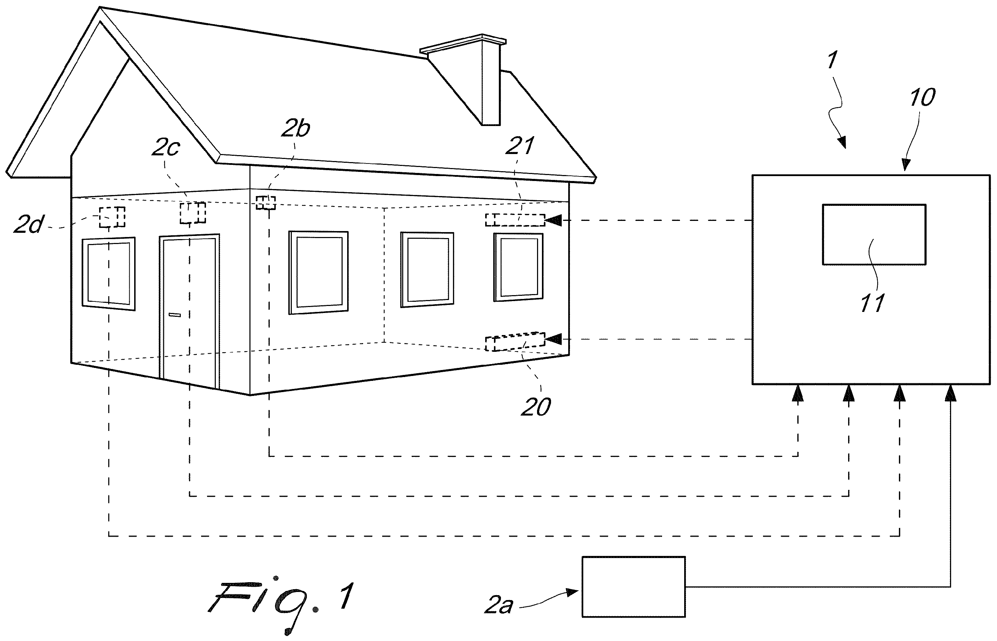

Figure 1 is a diagram of the system for regulating environmental conditions inside a building according to the invention.

With reference to the figure, the system for regulating environmental conditions inside a building according to the invention, generally designated by the reference numeral 1, comprises a plurality of sensor means 2a, 2b, 2c, etc. which comprise:
- at least one brightness sensor 2b;
- at least one presence sensor 2c configured to monitor the presence of individuals inside the building;
- at least one CO₂ sensor 2d configured to monitor the percentage of carbon dioxide inside the building.

Preferably, the sensor means further comprise at least one first temperature sensor 2a which is configured to monitor the temperature outside the building; and/or
- at least one second temperature sensor 2b which is configured to monitor the temperature inside the building.

In particular, the first temperature sensor 2a for monitoring the exterior temperature can comprise a dedicated sensor placed outside the building, but it can also be a remote sensor, managed by parties such as territorial bodies or meteorological centers, local or otherwise, which are capable of monitoring the exterior temperature in the locations where the building is present.

The plurality of sensor means 2a, 2b, etc. is connected, in input, to a control unit 10 which comprises a neural network-based artificial intelligence engine.

The neural network-based artificial intelligence engine is, in particular, configured to learn the pattern of use of the building, drawing on the data monitored by the sensor means 2a, 2b, etc., and as a consequence calculate an optimized and preventive adjustment of the environmental conditions in accordance with set comfort parameters, so defining a plurality of instructions for actuation means which are configured to control a plurality of adjustment devices 20, 21, etc..

In particular, the system 1 according to the invention is configured to learn repetitive dynamics of use of the enclosed spaces on the basis of which to actuate, using the actuation means, the adjustment devices 20, 21, etc. With respect to a scenario thus predicted, the system will subsequently apply corrections if the actual scenario deviates from the predicted scenario in light of what is detected by the sensor means 2a, 2b, etc.

Basically, the use of a neural network-based artificial intelligence engine makes it possible to draw on a series of (predictive) scenarios, increasingly precise and reliable, not least because, in use, the system 1 collects, processes and re-adapts the data by virtue of artificial intelligence.

Specifically, the adjustment devices of the environmental conditions of the building comprise at least one device for the forced exchange of the air inside the building and at least one device for adjusting the solar shading/blind apparatuses for regulating the brightness inside the building.

Conveniently, the adjustment device comprises a device for controlling the temperature and/or the brightness inside the building.

Advantageously, the sensor means can further comprise at least one humidity sensor.

The use of sensor means, of various types, and the ability to send all the data collected by the various sensor means to the neural network-based artificial intelligence engine makes it possible to obtain a system that is capable of predicting the various scenarios extremely precisely, so improving living comfort appreciably and reducing energy consumption enormously.

In turn, the solar shading/blind apparatus for adjusting the brightness inside the building comprises at least one dimming device associated with a door or window structure that delimits the building.

The system 1 can also comprise a device for controlling the humidity inside the building.

The system 1 according to the invention comprises, at the perimeter of the building, at least one window opening associated with a door or window structure.

In the system 1, the window opening is associated with at least a part of the sensor means 2a, 2b, 2c, etc.

For example, the window opening can accommodate the brightness sensor, and/or the first temperature sensor and optionally the humidity sensor.

Conveniently, the window opening is associated with at least a part of the adjustment devices 20, 21, etc.

For example, the window opening can accommodate the forced air exchange device, the solar shading/blind apparatus, etc.

Inside the building, it is possible for different regulation zones of the environmental conditions to be identified.

In these zones it is possible to have, at least partially, respective sensor means 2a, 2b, 2c, etc. connected to adjustment means 20, 21, etc. which are geared to regulate the environmental conditions of these regulation zones .

The operation of the system 1 for regulating environmental conditions inside a building, according to the invention, is the following.

In a first stage, the control unit 10 comprising the neural network-based artificial intelligence engine is "trained" in such a way as to "learn" to define commands, as a function of the data monitored by the sensor means 2a, 2b, 2c, etc. connected in input and of the actuation means associated with the adjustment devices 20, 21, etc. of the environmental conditions, such as for example the one or more devices for the forced exchange of the air inside the building and the one or more adjustment devices of the temperature inside the building.

The system 1 will impart the commands to the means of adjustment 20, 21, etc. on the basis of the predefined scenario, progressively updating itself, because in the meantime, by virtue of the collection of data originating from the sensor means 2a, 2b, 2c, etc., it learns to predict the scenarios, anticipating them and optimizing the commands.

By virtue of the data relating to the presence or absence of persons inside the building, the neural network-based artificial intelligence engine makes it possible to predict the presence/absence of persons, as a consequence bringing forward, or delaying, the switching-on or switching-off of the adjustment devices 20, 21, etc., in order to ensure maximum living comfort, together with an effective management of energy costs.

In practice it has been found that the system according to the invention fully achieves the intended aim and objects by providing a system for regulating environmental conditions inside a building that is capable of using, in input, in addition to the data relating to the temperature or brightness, specific information relating to the behavior of the users in order to ensure that the system adapts to them.

Furthermore, the system according to the invention makes it possible to manage multiple scenarios (and therefore greater complexity), and, by virtue of the use of a neural network that utilizes the information generated during learning, handles unresolved situations more correctly.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102025000001227 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A system (1) for regulating environmental conditions inside a building (100), **characterized in that** it comprises a plurality of sensor means (2a, 2b, 2c, etc.) which comprise:
- at least one brightness sensor (2b);
- at least one presence sensor (2c) configured to monitor the presence of individuals inside the building;
- at least one CO₂ sensor (2d) configured to monitor the percentage of carbon dioxide inside the building;
said plurality of sensor means (2a, 2b, 2c, etc.) being connected in input to a control unit (10) comprising a neural network-based artificial intelligence engine configured to define, as a function of the data monitored by said plurality of sensor means (2a, 2b, 2c, etc.), a plurality of commands for actuation means configured to actuate a plurality of adjustment devices (20, 21, etc.) for the adjustment of environmental conditions, which comprises at least one device for forced exchange of the air inside the building and at least one device for adjusting at least one solar shading/blind apparatus for adjusting the brightness inside the building.

2. The system (1) according to claim 1, **characterized in that** said plurality of sensor means (2a, 2b, 2c, etc.) further comprises at least one first temperature sensor (2a) configured to monitor the temperature outside the building and/or at least one humidity sensor and/or at least one second temperature sensor (2b) configured to monitor the temperature inside the building.

3. The system (1) according to claim 1, **characterized in that** said at least one solar shading/blind apparatus comprises at least one blind dimming device associated with a door or window structure that delimits said building.

4. The system (1) according to claim 1, **characterized in that** said plurality of adjustment devices (20, 21, etc.) comprises at least one device for controlling the humidity inside the building and/or a device for controlling the temperature inside the building.

5. The system (1) according to one or more of the preceding claims, **characterized in that** it comprises, at the perimeter of said building (100), at least one window opening associated with a door or window structure, said window opening being associated with at least part of said plurality of sensor means (2a, 2b, 2c, etc.).

6. The system (1) according to one or more of the preceding claims, **characterized in that** said window opening is associated with at least part of said plurality of adjustment devices (20, 21, etc.).

7. The system (1) according to one or more of the preceding claims, **characterized in that** said system (1) is configured to drive, through said actuation means, said adjustment devices (20, 21, etc.) on the basis of a predicted scenario, subsequently applying corrections if the actual scenario deviates from the predicted scenario in light of the detections by said sensor means (2a, 2b, etc.).

8. The system (1) according to one or more of the preceding claims, **characterized in that** said system (1) is configured to learn repetitive dynamics of use of the enclosed spaces on the basis of which to actuate, via said actuation means, said adjustment devices (20, 21, etc.).
